# FASCICULE DE BREVET EUROPEEN

(11) **EP 0 885 791 B1**
(45) Date de publication et mention de la délivrance du brevet: **23.04.2003**
(21) Numéro de dépôt: 98401486.0
(22) Date de dépôt: 17.06.1998
(51) Int. Cl.: B60S 1/38, F16C 11/04

(54) **Dispositif d'essuie-glace de véhicule automobile comportant des moyens simplifiés d'assemblage**
Kraftfahrzeug Scheibenwischervorrichtung mit vereinfachten Mitteln zur Montage
Vehicle windscreen wiper device with simplified assembly means

(30) Priorité: 17.06.1997 FR 9707480
(43) Date de publication de la demande: 23.12.1998
(73) Titulaire: VALEO SYSTEMES D'ESSUYAGE, 78321 La Verrière (FR)
(72) Inventeur: Raynaud, Richard, 63320 Champeix (FR)
(74) Mandataire: Gamonal, Didier

(56) Documents cités:
- EP-A- 0 281 397
- WO-A-96/22205
- DE-A- 4 438 830

## Description

La présente invention concerne un dispositif d'essuie-glace de véhicule automobile.

L'invention concerne plus particulièrement un dispositif d'essuie-glace comportant au moins un élément intermédiaire monté articulé sur un élément principal, autour d'un axe d'articulation sensiblement perpendiculaire à la direction longitudinale de l'élément principal et qui traverse deux ailes latérales parallèles de l'élément principal et deux joues latérales parallèles de l'élément intermédiaire, du type dans lequel il est prévu un élément antibruit comportant deux flasques parallèles latéraux interposés entre les ailes latérales de l'élément principal et les joues latérales de l'élément intermédiaire qui sont traversés par l'axe d'articulation, l'axe d'articulation s'étendant, en position assemblée des éléments, à travers des trous alignés des ailes, joues et flasques parallèles.

On connaît de nombreux exemples de réalisation d'un tel type d'essuie-glace dans lesquels l'axe d'articulation est constitué pour l'essentiel par un rivet métallique qui est introduit transversalement à travers les trous formés en vis-à-vis dans les ailes, flasques et joues parallèles et dont la tête est ensuite rivetée par sertissage. Un exemple d'une telle conception est décrit et représenté dans le document FR-A-2.415.563.

L'utilisation d'un axe d'articulation réalisé sous la forme d'un rivet métallique présente de nombreux inconvénients.

En effet, l'opération de sertissage du rivet nécessite de maintenir les différents composants afin d'éviter leur écrasement transversal lors du sertissage.

De plus, l'utilisation d'un rivet métallique est à l'origine de problèmes importants de corrosion dus notamment à des phénomènes de couples électrochimiques.

Enfin, cette conception connue d'assemblage des éléments articulés d'un essuie-glace ne permettent pas de réaliser les opérations d'assemblage de manière automatisée.

Afin de remédier à ces inconvénients, il a déjà été proposé de réaliser l'axe d'articulation sous la forme d'une simple tige cylindrique métallique qui est introduite transversalement et dont une partie du corps est montée serrée dans un ou des trous des autres éléments, ou dans un élément rapporté d'immobilisation axiale de la tige.

Cette conception permet de supprimer les problèmes inhérents aux rivets mais elle n'est pas entièrement satisfaisante dans la mesure où le nombre total des composants nécessaires à l'assemblage est élevé, accroissant le prix de l'ensemble et compliquant les opérations d'assemblage automatisé, et aussi dans la mesure où le recours à une tige métallique d'articulation est coûteux et n'est pas justifié du point de vue structurel.

La présente invention a pour but de proposer une nouvelle conception d'un dispositif d'essuie-glace dont l'axe d'articulation permet de remédier aux inconvénients inhérents aux conceptions connues mentionnées précédemment.

Dans ce but, l'invention propose un dispositif d'essuie-glace selon la revendication 1.

Selon des modes de réalisation de l'invention :
- la face externe de chaque flasque latéral de l'élément antibruit comporte une douille de guidage de l'axe d'articulation qui s'étend transversalement vers l'extérieur à travers un trou formé dans une aile latérale de l'élément principal, et l'extrémité transversale de l'axe d'articulation est reliée, par une partie sécable, à !'extrémité libre extérieure de l'une des deux douilles de guidage ;
- l'axe d'articulation est une pièce réalisée par moulage en matière plastique avec l'élément auquel elle est reliée par une partie sécable ;
- l'élément principal est un étrier principal d'une structure articulée de support d'une raclette d'essuyage d'un balai d'essuie-glace.

L'invention propose également un procédé de fabrication d'un tel essuie-glace de véhicule automobile caractérisé en ce qu'il comporte les étapes suivantes :
- on réalise séparément l'élément intermédiaire, l'élément principal et une pièce comportant l'axe d'articulation et l'élément antibruit reliés par une partie sécable,
- on assemble l'élément intermédiaire, l'élément principal et ladite pièce,
- on exerce un effort qui provoque la rupture de la partie sécable et la mise en place de l'axe d'articulation dans sa position assemblée.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en perspective éclatée illustrant le mode d'assemblage conforme aux enseignements de l'invention d'un palonnier intermédiaire appartenant à une structure articulée de support d'une raclette d'essuyage à l'extrémité libre d'un étrier principal d'un balai d'essuie-glace ;
- la figure 2 est une vue similaire à celle de la figure 1 sur laquelle les trois éléments illustrés sont représentés en position assemblée ;
- la figure 3 est une vue en section illustrant les différents éléments dans une position montée, mais avant l'assemblage final par introduction transversale de l'axe d'articulation ;
- la figure 4 est une vue de détail à plus grande échelle illustrant la liaison par une partie sécable entre l'axe d'articulation et l'élément antibruit ;
- la figure 5 est une vue similaire à celle de la figure 3 qui illustre les éléments en position assemblée.

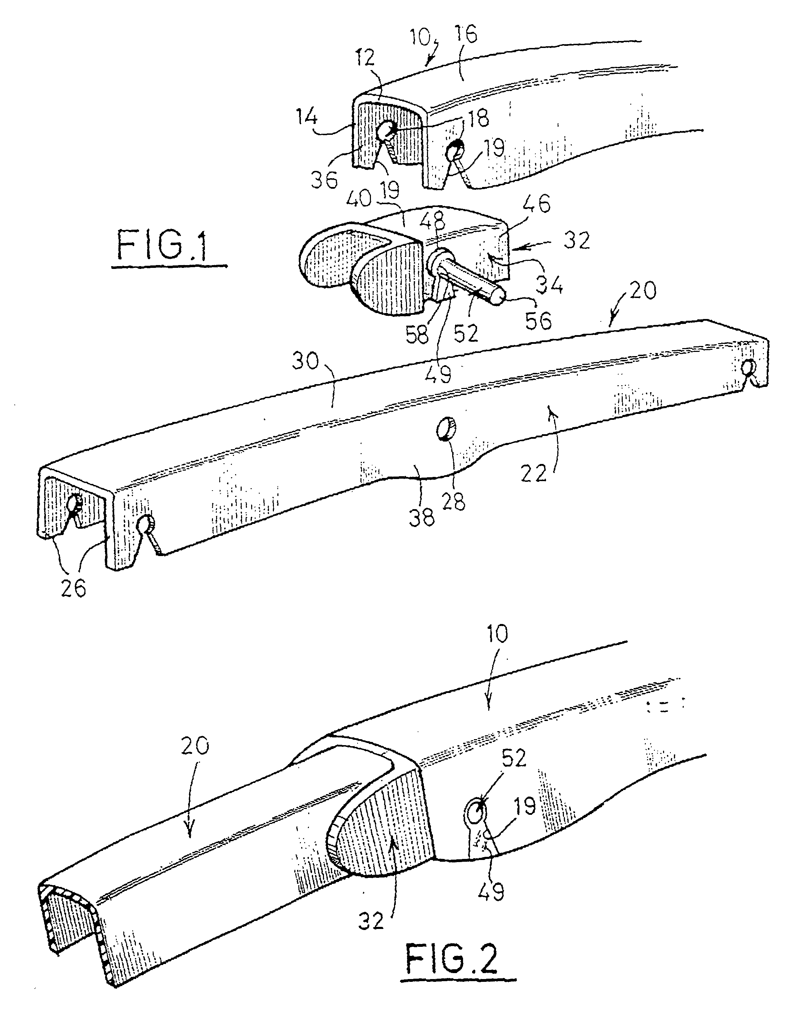

On a représenté sur la figure 1 l'une des extrémités 12 d'un étrier ou palonnier principal 10 d'un balai d'essuie-glace (non représenté).

L'extrémité 12 comporte deux ailes latérales parallèles et verticales 14 qui sont reliées entre elles par un dos longitudinal supérieur 16.

Chaque aile latérale 14 comporte un trou 18 pour le passage d'un axe d'articulation.

On a également représenté un palonnier intermédiaire, ou palonnier secondaire, 20 comportant une partie centrale d'articulation.

La partie centrale d'articulation 22 du palonnier secondaire 20 comporte deux joues latérales parallèles 26 percées chacune d'un trou 28 et qui sont reliées entre elles par un dos longitudinal supérieur 30.

On a aussi représenté un élément antibruit 32 qui est prévu pour être interposé entre l'extrémité 12 de l'étrier principal 10 et la partie d'articulation 22 du palonnier secondaire 20.

A cet effet, l'élément antibruit 32, qui est réalisé en matière plastique, comporte deux flasques latéraux parallèles 34 qui sont prévus pour être reçus entre les faces internes en vis-à-vis 36 des ailes latérales 14 de l'étrier principal 10 et les faces externes correspondantes 38 des joues parallèles 26 de la partie centrale d'articulation 22 du palonnier intermédiaire 20.

Les flasques latéraux 34 sont reliés entre eux par un dos longitudinal supérieur de liaison 40 qui est lui-même reçu entre les faces en vis-à-vis des dos 16 et 30 de l'étrier 10 et du palonnier 20 et dont la face interne peut comporter une nervure antibruit (non représentée) qui coopère avec la face supérieure du dos 30 du palonnier intermédiaire 20.

Chacune des faces externes 46 des flasques latéraux 34 se prolonge axialement vers l'extérieur par une douille de guidage 48 qui traverse en position assemblée le trou correspondant 18 formé dans l'aile latérale 14 de l'étrier principal 10.

De manière à assurer l'articulation du palonnier 20 par rapport à l'extrémité 12 de l'étrier principal 10, il est prévu un axe d'articulation 52.

L'axe d'articulation 52 se présente sous la forme d'une tige cylindrique qui, dans la position assemblée des éléments illustrée aux figures 2 et 5, est reçue à travers les trous 28 formés dans les joues latérales parallèles 26 du palonnier intermédiaire 20.

L'axe d'articulation 52 traverse aussi les trous 18 formés dans les ailes latérales 14 de l'étrier principal 10 avec interposition des douilles de guidage 48 des flasques latéraux 34 de l'élément antibruit 32, les extrémités transversales opposées 56 de la tige 52 étant chacune reçue dans un trou 54 d'une douille 48 dans lequel elle est par exemple emmanchée légèrement à force de manière à assurer le maintien transversal de l'axe 52 en position assemblée.

Selon une conception connue, et afin d'une part de faciliter la mise en place de l'élément antibruit 32 à l'intérieur de l'extrémité 12 de l'étrier principal et, d'autre part, d'éviter des mouvements de pivotement du cavalier antibruit 32 par rapport à l'étrier principal 10, les trous 18 formés dans les ailes latérales 14 de l'étrier principal 10 se prolongent par des fentes en V 19 qui sont ouvertes verticalement vers le bas et dont le profil est complémentaire du profil externe de portions en relief 49 qui prolongent les douilles 48 verticalement vers le bas le long des faces externes des flasques latéraux 34 de l'élément antibruit 32.

Comme on peut le voir sur les figures, et conformément à un mode de réalisation de l'invention, la tige ou axe d'articulation 52 est réalisée venue de moulage en matière plastique avec l'élément antibruit 32.

Plus particulièrement, l'une des extrémités transversales opposées 56 de la tige d'articulation 52 est initialement reliée au bord circulaire du trou 54, au niveau d'une face latérale extérieure 60 de l'une des douilles 48 du cavalier antibruit 32, par une portion sécable amincie de section réduite 58.

Lorsque la pièce constituée par le cavalier antibruit 32 et par la tige d'articulation 52 est obtenue par moulage, la tige 52 est alignée axialement avec les trous 54 du cavalier 32.

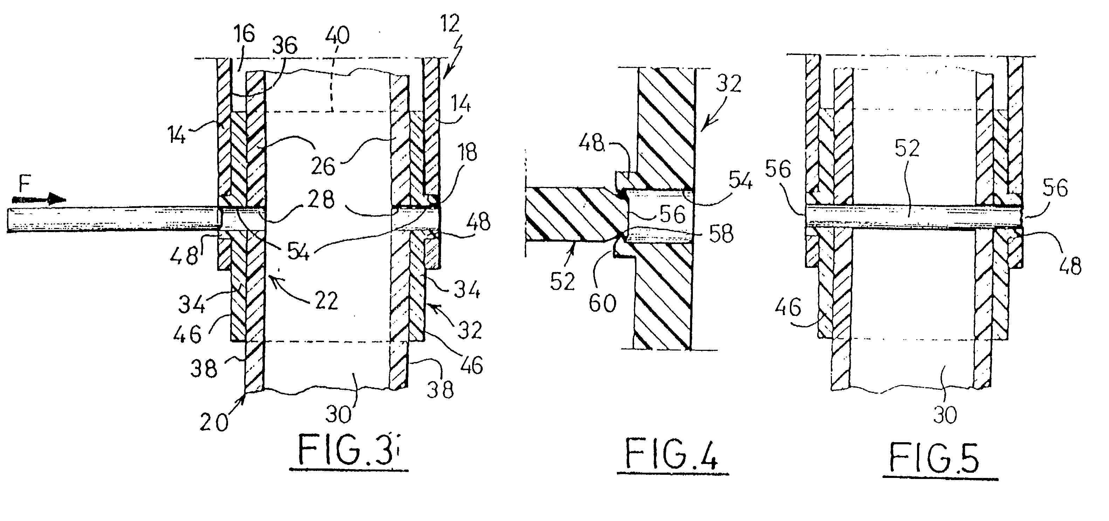

On décrira maintenant le mode d'assemblage des différents éléments en référence notamment aux figures 3 à 5.

Après avoir mis en place l'élément antibruit 32 avec ses douilles de guidage 48 dans les trous 18 des ailes 14 et après avoir introduit la partie médiane d'articulation 22 du palonnier intermédiaire 20 entre les faces internes en vis-à-vis des flasques latéraux 34 de l'élément antibruit 32 de manière à aligner les trous 28 avec les alésages internes des douilles 48, l'opérateur introduit ensuite transversalement le corps d'axe d'articulation 52, par exemple de la gauche vers la droite en considérant la figure 3, jusqu'à ce qu'il vienne occuper sa position illustrée à la figure 5.

A cet effet, l'opérateur exerce sur l'extrémité libre, à gauche en considérant la figure 3, de la tige 52 un effort de poussée selon la flèche F. Cet effort de poussée a pour effet de provoquer la rupture de la zone sécable ou fusible 58 et donc de séparer l'extrémité 56, préalablement rattachée par la partie sécable 58, de la douille 48 de l'élément antibruit 32 pour permettre son introduction transversale, c'est-à-dire parallèlement à l'axe d'articulation des différents éléments, tout d'abord dans le trou 54 de la douille 48 associée puis, en continuant l'effort de poussée et donc le déplacement transversal de la gauche vers la droite de la tige d'articulation 52, successivement à l'intérieur des deux trous 28 puis dans le trou 54 de l'autre douille 48 pour aboutir à la position illustrée à la figure 5.

Grâce à la conception selon l'invention, on comprend aisément que la tige d'articulation 52 qui est initialement reliée au cavalier antibruit 32 ne peut pas être perdue avant l'assemblage et que son positionnement en regard des différents trous alignés avant son introduction est découlé naturellement de sa conception en une seule pièce avec le cavalier 32.

L'assemblage peut être très aisément automatisé et le coût de la tige d'articulation 52 est pratiquement négligeable dans la mesure où elle est réalisée venue de matière de moulage avec le cavalier 32.

L'invention n'est pas limitée au cas où le cavalier antibruit 32 est interposé entre une extrémité d'un étrier principal et un palonnier intermédiaire, l'élément intermédiaire pouvant être constitué directement par un palonnier dont les extrémités libres comportent des griffes pour la retenue d'une raclette d'essuyage appartenant à l'essuie-glace.

L'invention trouve aussi à s'appliquer dans le cas où l'élément antibruit ne se présente pas sous la forme d'un cavalier mais est simplement constitué par deux flasques parallèles transversaux formant entretoises entre les éléments 10 et 20, l'un de ces flasques indépendants pouvant être réalisé, dans un mode de réalisation, avec une tige d'articulation 52 réalisée venue de matière par moulage avec une partie de liaison sécable.

## Revendications

1. Dispositif d'essuie-glace de véhicule automobile du type comportant au moins un élément intermédiaire (20) monté articulé sur un élément principal (10) , autour d'un axe d'articulation (52) sensiblement perpendiculaire à la direction longitudinale de l'élément principal (10) et qui traverse deux ailes latérales parallèles (14) de l'élément principal (10) et deux joues latérales parallèles (26) de l'élément intermédiaire (20), du type dans lequel il est prévu un élément antibruit (32) comportant deux flasques parallèles latéraux (34) interposés entre les ailes latérales (14) de l'élément principal (10) et les joues latérales (26) de l'élément intermédiaire (20) qui sont traversés par l'axe d'articulation (52), l'axe d'articulation (52) s'étendant, en position assemblée des éléments, à travers des trous alignés des ailes (14), joues (26) et flasques (34) parallèles, l'axe d'articulation (52) étant, avant assemblage des éléments (10, 20, 32), aligné axialement avec les trous alignés (18, 28, 54) des éléments, **caractérisé en ce que** l'une de ses extrémités transversales (56) est reliée à l'un (32) des trois éléments par une partie sécable (58).

2. Dispositif d'essuie-glace selon la revendication 1, **caractérisé en ce que** la face externe (46) de chaque flasque latéral (34) de l'élément antibruit (32) comporte une douille (48) de guidage de l'axe d'articulation (52) qui s'étend transversalement vers l'extérieur à travers un trou (18) formé dans une aile latérale (14) de l'élément principal (10), et **en ce que** l'extrémité transversale (56) de l'axe d'articulation (52) est reliée, par une partie sécable (58), à l'extrémité libre extérieure (60) de l'une des deux douilles de guidage (48).

3. Essuie-glace selon l'une quelconque des revendications précédentes, **caractérisé en ce que** l'axe d'articulation (52) est une pièce réalisée par moulage en matière plastique avec l'élément (32) auquel elle est reliée par une partie sécable (58).

4. Essuie-glace selon l'une quelconque des revendications précédentes, **caractérisé en ce que** l'élément principal (10) est un étrier principal d'une structure articulée de support d'une raclette d'essuyage d'un balai d'essuie-glace.

5. Procédé de fabrication d'un dispositif d'essuie-glace selon l'une des revendications précédentes, **caractérisé en ce qu'**il comporte les étapes suivantes:
- on réalise séparément l'élément intermédiaire (20), l'élément principal (10) et une pièce comportant l'axe d'articulation (52) et l'élément antibruit (32) reliés par une partie sécable (58),
- on assemble l'élément intermédiaire (20), l'élément principal (10) et ladite pièce,
- on exerce un effort (F) qui provoque la rupture de la partie sécable (58) et la mise en place de l'axe d'articulation (52) dans sa position assemblée.

## Patentansprüche

1. Scheibenwischervorrichtung für Kraftfahrzeuge mit mindestens einem Zwischenteil (20), das um eine etwa lotrecht zur Längsrichtung des Hauptteils (10) verlaufende Gelenkachse (52) an einem Hauptteil (10) angelenkt ist, Gelenkachse, die zwei parallele Seitenflügel (14) des Hauptteils (10) und zwei parallele Seitenwangen (26) des Zwischenteils (20) durchquert, wobei ein Lärmschutzteil (32) vorgesehen ist, das zwei parallele Seitenflansche (34) umfasst, die zwischen den von der Gelenkachse (52) durchquerten Seitenflügeln (14) des Hauptteils (10) und Seitenwangen (26) des Zwischenteils (20) angeordnet sind, wobei sich die Gelenkachse (52) in zusammengebauter Position der Teile durch fluchtende Löcher der parallelen Flügel (14), Wangen (26) und Flansche (34) erstreckt, wobei die Gelenkachse (52) vor dem Zusammenbau der Teile (10, 20, 32) axial mit den fluchtenden Löchern (18, 28, 54) der Teile fluchtet, **dadurch gekennzeichnet, dass** eines ihrer Querenden (56) über einen trennbaren Abschnitt (58) mit einem (32) der drei Teile verbunden ist.

2. Scheibenwischervorrichtung nach Anspruch 1, **dadurch gekennzeichnet, dass** die Außenseite (46) jedes Seitenflansches (34) des Lärmschutzteils (32) eine Führungshülse (48) der Gelenkachse (52) umfasst, die sich quer durch ein in einem Seitenflügel (14) des Hauptteils (10) vorgesehenes Loch (18) nach außen erstreckt, und dass das Querende (56) der Gelenkachse (52) über einen trennbaren Abschnitt (58) mit dem freien Außenende (60) einer der beiden Führungshülsen (48) verbunden ist.

3. Scheibenwischervorrichtung nach einem der vorangehenden Ansprüche, **dadurch gekennzeichnet, dass** die Gelenkachse (52) ein Plastikformteil aus einem Stück mit dem Teil (32) ist, mit dem sie über einen trennbaren Abschnitt (58) verbunden ist.

4. Scheibenwischervorrichtung nach einem der vorangehenden Ansprüche, **dadurch gekennzeichnet, dass** das Hauptteil (10) ein Hauptbügel einer gelenkigen Tragstruktur eines Wischblatts eines Scheibenwischerarms ist.

5. Herstellungsverfahren einer Scheibenwischervorrichtung nach einem der vorangehenden Ansprüche, **gekennzeichnet durch** die folgenden Etappen:
- man stellt das Zwischenteil (20), das Hauptteil (10) und ein die Gelenkachse (52) und das Lärmschutzteil (32), die über einen trennbaren Abschnitt (58) miteinander verbunden sind, umfassendes Teil getrennt her,
- man baut das Zwischenteil (20), das Hauptteil (10) und das besagte Teil zusammen,
- man übt eine Kraft (F) aus, die zum Bruch des trennbaren Abschnitts (58) und zum Einsatz der Gelenkachse (52) in ihre zusammengebaute Position führt.

## Claims

1. A motor vehicle wiper device of the type comprising at least one intermediate element (20) mounted so as to be articulated on a principal element (10), about an articulation axis (52) substantially perpendicular to the longitudinal direction of the principal element (10) and which passes through two parallel lateral flanges (14) on the principal element (10) and two parallel lateral cheeks (26) on the intermediate element (20), of the type in which there is provided an anti-noise element (32) comprising two parallel lateral plates (34) interposed between the lateral flanges (14) on the principal element (10) and the lateral cheeks (26) on the intermediate element (20) through which the articulation axis (52) passes, the articulation axis (52) extending, in the assembled position of the elements, through aligned holes in the flanges (14), cheeks (26) and parallel plates (34), the articulation axis (52) being, before the assembly of the elements (10, 20, 32), aligned axially with the aligned holes (18, 28, 54) in the elements, **characterised in that** one of its transverse ends (56) is connected to one (32) of the three elements by a breakable part (58).

2. A wiper device according to Claim 1, **characterised in that** the external face (46) of each lateral plate (34) of the anti-noise element (32) comprises a sleeve (48) for guiding the articulation axis (52) which extends transversely towards the outside through a hole (18) formed in a lateral flange (14) of the principal element (10), and **in that** the transverse end (56) of the articulation axis (52) is connected, by a breakable part (58), to the external free end (60) of one of the two guidance sleeves (48).

3. A wiper according to any one of the preceding claims, **characterised in that** the articulation axis (52) is a part produced by moulding from plastics material with the element (32) to which it is connected by a breakable part (58).

4. A wiper according to any one of the preceding claims, **characterised in that** the principal element (10) is a principal link of an articulated structure supporting a wiper rubber of a wiper blade.

5. A method of manufacturing a wiper device according to one of the preceding claims, **characterised in that** it comprises the following steps:
- the intermediate element (20), the principal element (10) and a piece comprising the articulation axis (52) and the anti-noise element (32) connected by a breakable part (58) are produced separately,
- the intermediate element (20), the principal element (10) and the said part are assembled,
- a force (F) is exerted which causes the rupture of the breakable part (58) and the placing of the articulation axis (52) in its assembled position.
